# EUROPEAN PATENT APPLICATION

(11) **EP 3 672 038 A1**
(43) Date of publication of application: **24.06.2020**
(21) Application number: 19211480.9
(22) Date of filing: 26.11.2019
(51) Int. Cl.: H02K 15/03, H02K 15/12, H02K 11/215

(54) **PERMANENT MAGNET ROTOR AND ITS MANUFACTURING METHOD**

(30) Priority: 29.11.2018 JP 2018223567
(71) Applicant: KABUSHIKI KAISHA TOSHIBA, Minato-ku Tokyo (JP); Toshiba Lifestyle Products & Services Corporation, Kawasaki-shi, Kanagawa 210-0007 (JP)
(72) Inventor: Yokoyama, Akiyuki, Tokyo (JP); Nakayama, Tadahiro, Tokyo (JP); Shiga, Tsuyoshi, Kanagawa (JP)
(74) Representative: Hoffmann Eitle

(57) **Abstract**

A method for manufacturing a rotor magnet of a rotor of a permanent magnet motor according to the present embodiment, the rotor magnet being constituted of a plurality of main magnets and a plurality of auxiliary magnets, the main magnets being magnetically oriented in a first direction, the auxiliary magnets being magnetically oriented in a second direction, the auxiliary magnets being disposed respectively between the main magnets, includes; in the rotor, forming a divided resin molded part by resin-molding the main magnets and the auxiliary magnets, the main magnets and the auxiliary magnets being arrayed in an arc-like shape whose circumference is divided into a plurality of parts, the main magnets being not yet magnetized, the auxiliary magnets being magnetized in the second direction; magnetizing the main magnets of the divided resin molded part in the first direction; and connecting a plurality of divided resin molded parts in a circular shape.

## Description

### Field of the invention

Embodiments of the present invention relate to a method for manufacturing a rotor magnet in a rotor of a permanent magnet motor including main magnets and auxiliary magnets whose magnetic orientations are different from each other, a rotor magnet manufactured by employing the method, and a permanent magnet motor including a rotor having main magnets and auxiliary magnets whose magnetic orientations are different from each other.

### Description of the related art

In Japanese Patent Laid-Open No. 2012-50179 (Patent Literature 1), the following method for manufacturing a Halbach array magnet is disclosed. A plurality of first magnets each magnetized in a radial direction are arranged at predetermined intervals in a ring-shaped space, and a plurality of second cavities whose wall surfaces in a circumferential direction are formed by the first magnets are formed. Upon filling the second cavities with molten resin for manufacturing magnets, the molten resin with which the second cavities are filled is magnetized in a circumferential direction by a second magnetization part which is disposed in the vicinity of the second cavities, and the first magnets and second magnets are taken out from the ring-shaped space. Thus, the Halbach array magnet is resin-molded.

In Patent Literature 1, a fixed mold and a movable mold are used for the above-mentioned manufacturing, and the second magnetization part for magnetizing the second magnets in the circumferential direction is disposed in the movable mold. This second magnetization part has a complicated structure as described in paragraph [0044] in Patent Literature 1, and it is extremely difficult to magnetize the second magnets in the circumferential direction by using the second magnetization part upon filling the second cavities with the molten resin.

### Brief description of the drawings

FIG. 1 shows a plan view, a front view, and a side view of a divided resin part in a first embodiment;
FIG. 2 is a diagram for explaining a state in which the divided resin part is resin-molded by a molding mold;
FIG. 3 is a flowchart showing a process of manufacturing a rotor;
FIG. 4 is a perspective view showing the completed rotor;
FIG. 5 is a perspective view (part 1) showing a part of a permanent magnet motor;
FIG. 6 is a perspective view (part 2) showing a part of the permanent magnet motor;
FIG. 7 is a diagram showing a signal waveform which a magnetic sensor outputs when the rotor is rotating;
FIG. 8 is a diagram showing a case in which in arrangement of main magnets and auxiliary magnets in an axial direction, no steps are provided, corresponding to the diagram in FIG. 7;
FIG. 9 is a flowchart showing a process of manufacturing a rotor in a second embodiment;
FIG. 10 is a perspective view showing a divided resin part in a third embodiment;
FIG. 11 is a perspective view showing a divided resin part in a fourth embodiment; and
FIG. 12 is a perspective view of a permanent magnet motor in a fifth embodiment in which a rotor yoke is illustrated in a transparent view.

### Detailed description of the embodiments

Provided are a method for manufacturing a rotor magnet including main magnets and auxiliary magnets whose magnetic orientations are different from each other and which allows the rotor magnet to be further easily manufactured; a rotor magnet manufactured by the method; and a permanent magnet motor including a rotor having main magnets and auxiliary magnets whose magnetic orientations are different from each other.

The method for manufacturing a rotor magnet of a rotor of a permanent magnet motor including a magnet, the magnet being constituted of a plurality of main magnets and a plurality of auxiliary magnets, the main magnets being magnetically oriented in first direction, the auxiliary magnets being magnetically oriented in second direction different from the first direction, the auxiliary magnets being disposed respectively between the main magnets, according to the present embodiment, includes: in the rotor, forming a divided resin molded part by resin-molding the main magnets and the auxiliary magnets, the main magnets and the auxiliary magnets being arrayed in an arc-like shape whose circumference is divided into a plurality of parts, the main magnets being not yet magnetized, the auxiliary magnets being magnetized in second direction; magnetizing the main magnets of the divided resin molded part in a first direction; and connecting a plurality of divided resin molded parts in a circular shape.

In addition, a permanent magnet motor according to the present embodiment includes a rotor having a plurality of main magnets magnetically oriented in a direction in which a rotor yoke is located and a plurality of auxiliary magnets magnetically oriented in a circumferential direction, the auxiliary magnets being arranged respectively between the main magnets, and on each at least one end portion of each of the main magnets in a longitudinal direction, a step is provided, and on each at least one end portion of each of the auxiliary magnets in the longitudinal direction, a step is provided, respectively.

### (First Embodiment)

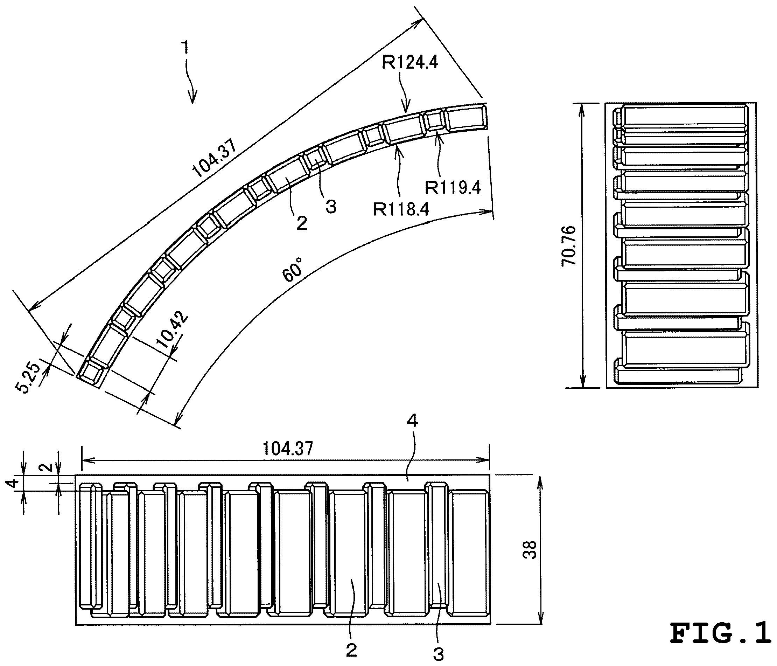

FIG. 1 shows a divided resin molded part 1 of a rotor magnet including a Halbach array magnet according to the present embodiment. The divided resin molded part 1 is molded of resin 4 with eight main magnets 2 and eight auxiliary magnets 3 alternately arranged and is of an arc shape whose central angle is 60 degrees. Lengthwise and crosswise dimensions of each of the main magnets 2 is 30 × 10.42 [mm], and lengthwise and crosswise dimensions of each of the auxiliary magnets 3 is 30 × 5.25 [mm]. A thickness dimension of each of the auxiliary magnets 3 is set to be slightly thinner than a thickness dimension of each of the main magnets 2. A height dimension of the divided resin molded part 1 is 38 mm, and in an upper part in FIG. 1, steps are formed such that an upper surface of each of the auxiliary magnets 3 is 2 mm higher than an upper surface of each of the main magnets 2. In the present embodiment, a longitudinal direction of each of the magnets 2 and 3 is an axial direction, that is, the above-mentioned lengthwise direction. A lateral width dimension of the divided resin molded part 1 is 104.37 mm, and a longitudinal width dimension thereof is 70.76 mm.

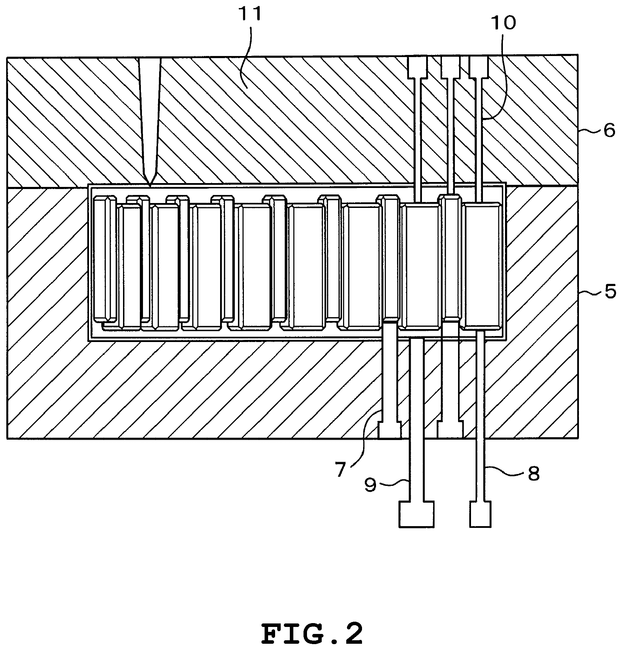

FIG. 2 shows an image in a case in which the divided resin molded part 1 is resin-molded. Note that at this stage, the main magnets 2 are not yet magnetized, and the auxiliary magnets 3 have been magnetized in a circumferential direction. The main magnets 2 and the auxiliary magnets 3 which are alternately arrayed are housed in a core 5 which is a mold and a cavity 6. In a lower portion of the core 5 in FIG. 2, positioning inserts 7, a magnet ejection pin 8, and a resin part ejection pin 9 are disposed. On the other hand, on a side of the cavity 6 in an upper portion of FIG. 2, magnet holding pins 10 and resin filling gates 11 are disposed. The resin 4 is filled from the resin filling gates 11, and molding is conducted.

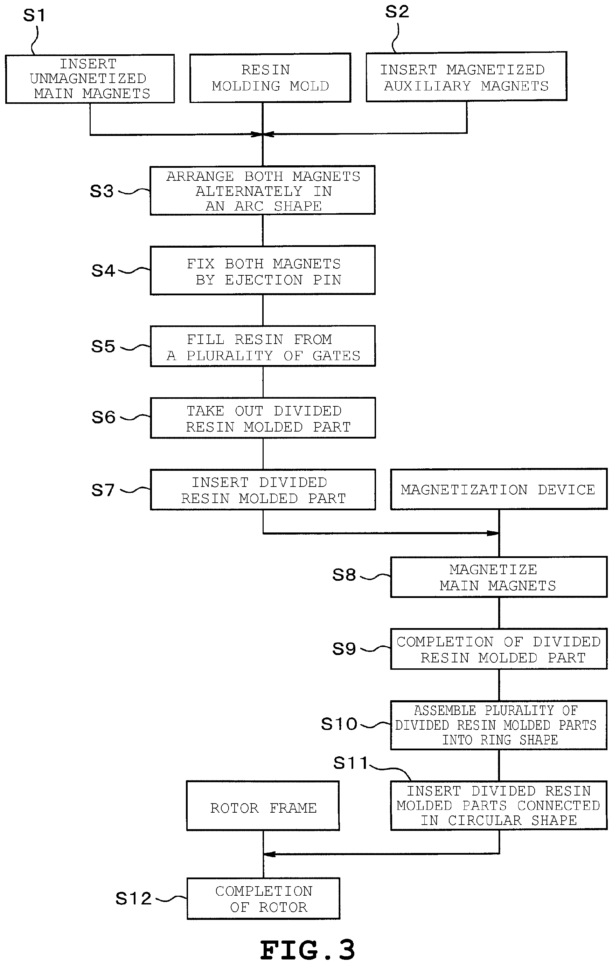

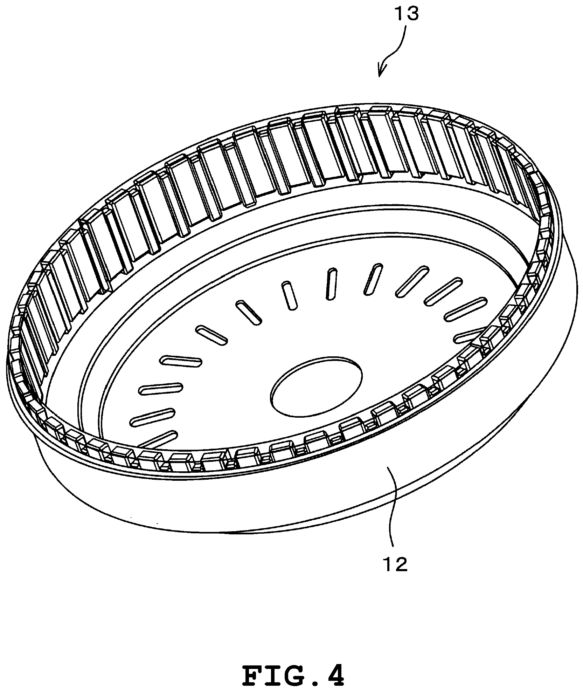

FIG. 3 is a flowchart showing a process of manufacturing a rotor. Unmagnetized main magnets 2 and magnetized auxiliary magnets 3 are inserted in a resin molding mold (S1 and S2), and both the magnets 2 and 3 are alternately arranged in an arc shape (S3). Subsequently, both the magnets 2 and 3 are fixed by the magnet ejection pin 8 (S4), and the resin 4 is filled from the plurality of gates 11 (S5). The molded divided resin molded part 1 is taken out (S6) and is inserted into a magnetization device (S7), thereby magnetizing the main magnets 2 (S8). At this point in time, the divided resin molded part 1 is completed (S9). Six divided resin molded parts 1 are assembled in a ring shape of a circular shape (S10) and thereafter, are inserted onto an inner peripheral side of a rotor yoke 12 shown in FIG. 4 (S11), thereby completing a rotor 13 (S12).

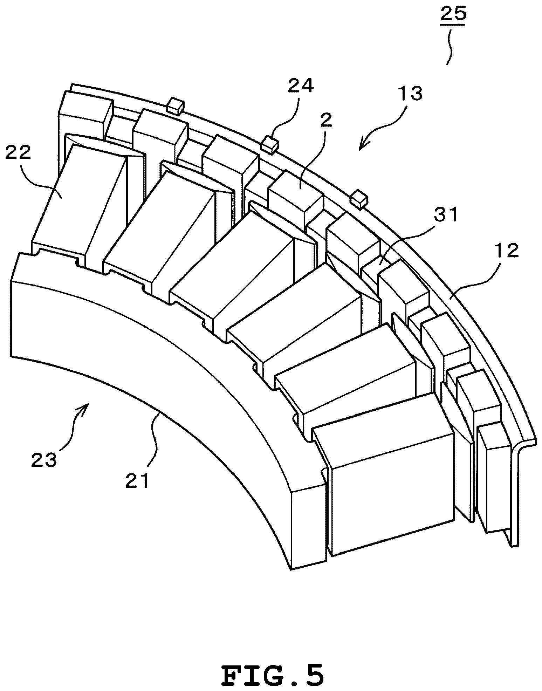

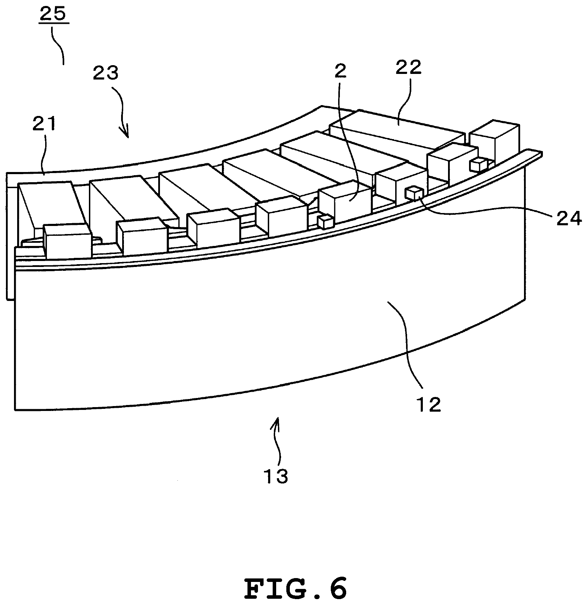

FIG. 5 and FIG. 6 show an example in which in order to detect rotational positions, for example, magnetic sensors such as hall sensors are disposed on the rotor 13. In addition, in FIG. 5 and FIG. 6, a part of a stator 23 including a stator yoke 21 and a coil 22 is also shown. Lower end surfaces of the auxiliary magnets 3 which are shown in upper positions of FIG. 5 and FIG. 6 are located in positions which coincide with a position of a lower end surface of the rotor yoke 12 or are slightly lower than the lower end surface of the rotor yoke 12. In contrast to this, lower end surfaces of the main magnets 2 are higher than the lower end surface of the rotor yoke 12. In other words, both the magnets 2 and 3 are arrayed such that the lower end surfaces of both the magnets 2 and 3 form steps, that is, recesses and projections.

As shown in FIG. 6, the magnetic sensors 24 whose number is, for example, three are supported by supporting members, not shown, in a state in which slight gaps with respect to the lower end surface of the rotor yoke 12 are formed. Thus, when the rotor 13 is rotated, the magnetic sensors 24 come to be in positions where the above-mentioned lower end surfaces thereof are engaged with the recesses of an array of the recesses and projections. Note that a radial gap type permanent magnet motor 25 is constituted of the rotor 13, the stator 23, and the magnetic sensors 24.

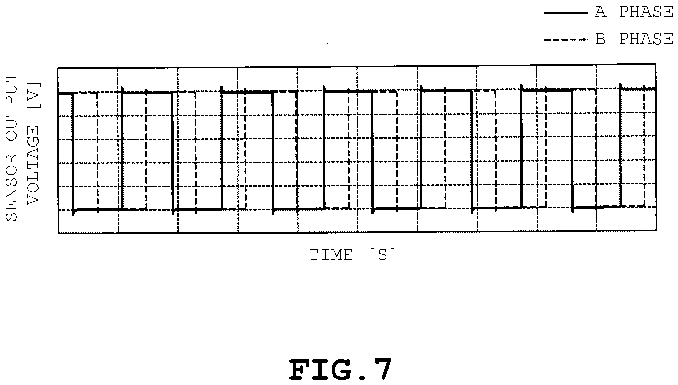

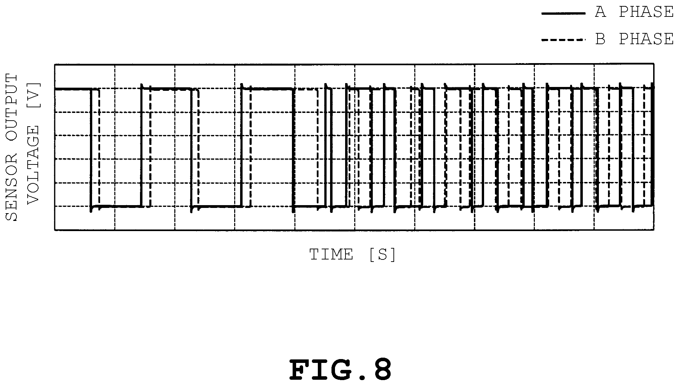

FIG. 7 shows waveforms of signals outputted by the magnetic sensors, which are disposed as shown in FIG. 5 and FIG. 6, when the rotor 13 is rotating. FIG. 8 shows waveforms in a case in which no steps are provided in the arrangement of the main magnets 2 and the auxiliary magnets 3 in the axial direction. By providing the steps, leakage magnetic flux is suppressed and no missing and variation of signals outputted by the magnetic sensors appear, thereby enabling stable magnetic pole determination.

Note that in the present embodiment, since the lengthwise dimension of each of the main magnets 2 and the lengthwise dimension of each of the auxiliary magnets 3 are equal to each other, steps are also formed on an upper end surface side by providing the steps on the lower end surface side on which the magnetic sensors 24 are disposed. Instead of this, by making the lengthwise dimension of each of the main magnets 2 and the lengthwise dimension of each of the auxiliary magnets 3 different from each other, a structure in which no steps are provided on the upper end surface side can also be formed.

As described above, according to the present embodiment, when the Halbach array magnet constituted of the plurality of main magnets 2 which are magnetically oriented in the radial direction and the plurality of auxiliary magnets 3 which are magnetically oriented in the circumferential direction and are disposed respectively between the main magnets 2 is manufactured as the rotor magnet, the main magnets 2 which are not yet magnetized and the auxiliary magnets 3 which have been magnetized in the circumferential direction are arrayed in the arc shape whose circumference is divided into a plurality of parts and are resin-molded, thereby forming the divided resin molded part 1. The main magnets 2 of each divided resin molded part 1 are magnetized in the radial direction, and a plurality of divided resin molded parts 1 are connected in a circular shape. Thus, assemblability of the rotor magnet having the Halbach array magnet can be simplified. In addition, since after magnetizing the magnets 2 and 3, the plurality of divided resin molded parts 1 are connected, the magnetization of the respective magnets 2 and 3 can be easily made.

In this case, by setting the thickness dimension of each of the auxiliary magnets 3 in the radial direction thinner than that of each of the main magnets 2, stiffness of the divided resin molded parts 1 can be enhanced. In addition, by providing the steps on the end surface side on which the main magnets 2 and the auxiliary magnets 3 face the magnetic sensors, the stiffness of the divided resin molded parts 1 can be enhanced, and the magnetic pole determination by the magnetic sensors can be stably performed.

### (Second Embodiment)

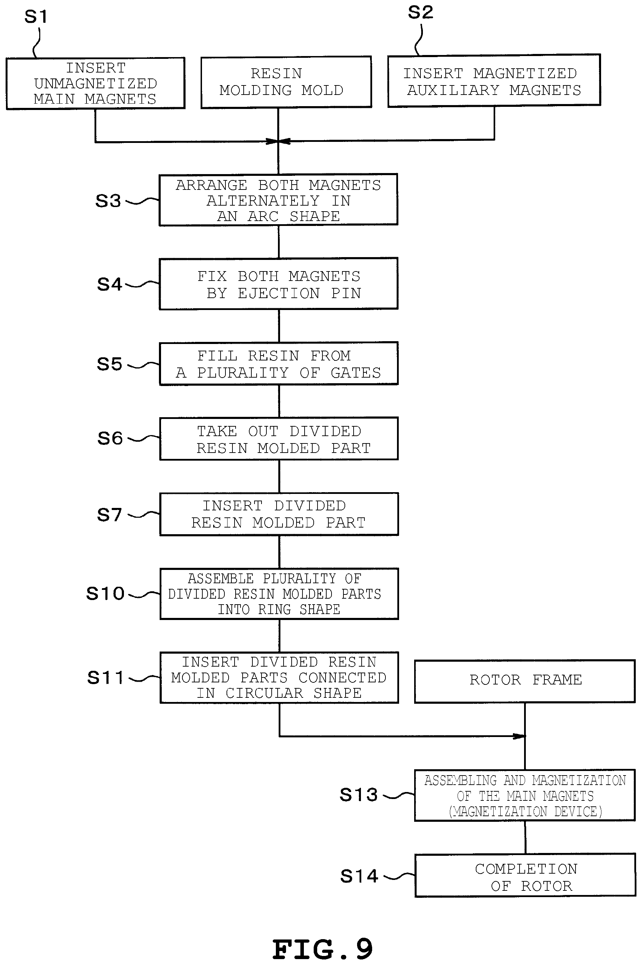

Hereinafter, a second embodiment will be described by denoting the same parts as in those in the first embodiment by the same reference signs as in the first embodiment and omitting the description of the same parts and describing parts different from those in the first embodiment. In the second embodiment, a process of manufacturing a rotor is slightly different from that in the first embodiment. As shown in FIG. 9, the steps from S1 to S7 are executed, and without magnetizing the main magnets 2, the steps S10 and S11 are executed. With the divided resin molded parts 1 assembled in the ring shape inserted onto an inner peripheral side of a rotor frame 12, the main magnets 2 are magnetized by a magnetization device (S13). Thus, a rotor 13 is completed (S14). According to the second embodiment as described above, since with the ring-like divided resin molded parts 1 inserted into the rotor frame 12, the main magnets 2 are magnetized, magnetic repulsive force and attractive force of the magnets 2 and 3 are not exerted upon assembling, thereby facilitating the assembling.

### (Third and Fourth Embodiments)

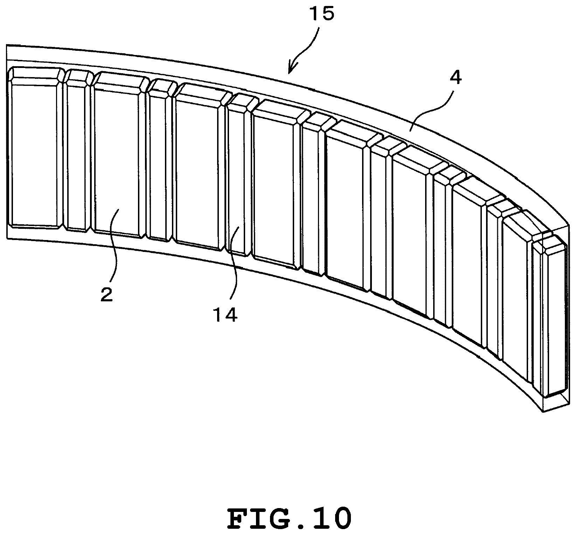

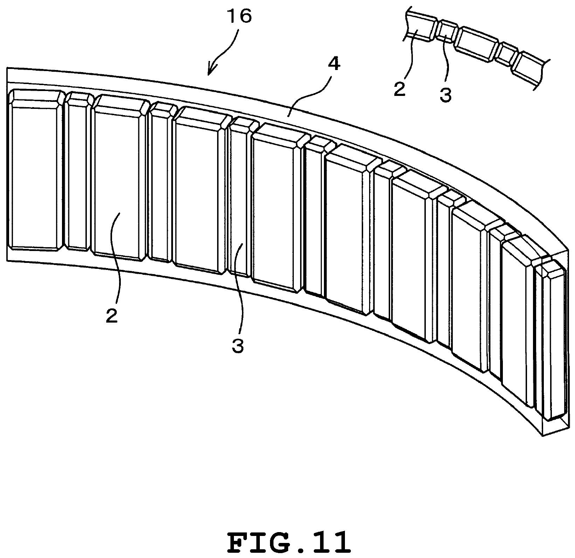

FIG. 10 and FIG. 11 show a third embodiment and a fourth embodiment, respectively, and other configuration examples of divided resin parts. In the third embodiment shown in FIG. 10, a divided resin part 15 is configured such that a thickness dimension of each of auxiliary magnets 14 is the same as a thickness dimension of each of main magnets 2 and no steps are provided unlike that in the first embodiment, and signal waveforms of magnetic sensors correspond to those shown in FIG. 8.

In the fourth embodiment shown in FIG. 11, a divided resin part 16 is configured such that a thickness of each of auxiliary magnets 3 in the configuration in the third embodiment is made thinner than a thickness of each of main magnets 2 as in the first embodiment.

### (Fifth Embodiment)

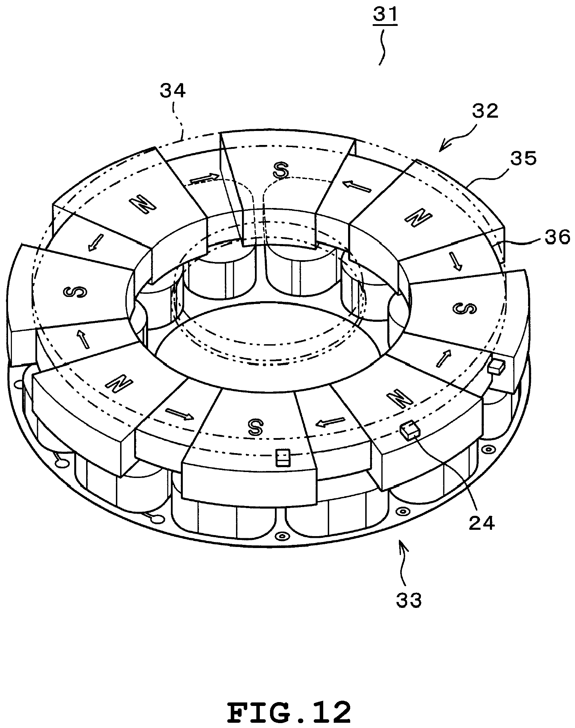

FIG. 12 shows a fifth embodiment which is applied to an axial gap type permanent magnet motor 31. In this motor 31, in an upper portion in FIG. 12, a rotor 32 is located, and in a lower portion in FIG. 12, a stator 33 is located. A rotor yoke 34 shown in a transparent view in FIG. 12 is constituted of a ring-like flat plate, and on a lower surface side of the rotor yoke 34, main magnets 35 and auxiliary magnets 36 are disposed. The main magnets 35 are magnetically oriented in an upward direction from a lower side, that is, in an axial direction. The auxiliary magnets 36 are magnetically oriented in a circumferential direction as in the first embodiment and the like.

A length of each of the main magnets 35 in a radial direction which is a longitudinal direction is set to be longer than a length of each of the auxiliary magnets 36 in the radial direction. End portions of the main magnets 35 in the radial direction protrude in such a way as to be located further outside than an outer edge of the rotor yoke 34. End surfaces of the auxiliary magnets 36 in the radial direction are located in such a way as to coincide with the outer edge of the rotor yoke 34 or are located slightly further inside than the outer edge thereof. In other words, respective leading end surfaces of both the magnets 35 and 36 are arrayed in such a way as to form steps in the circumferential direction, that is, recesses and projections. The magnets 35 and 36 are resin-molded by employing a manufacturing method as that in the first embodiment.

Magnetic sensors 24 are supported by supporting members, not shown, in a state in which slight gaps with respect to the outer edge of the rotor yoke 34 are formed. Thus, when the rotor 32 is rotated, the magnetic sensor 24 come to be in positions where the above-mentioned leading end surfaces thereof are engaged with the recesses of an array of the recesses and projections.

Note that in the present embodiment, by making a dimension of each of the main magnets 35 and a dimension of each of the auxiliary magnets 36 in the radial direction different from each other, the steps are provided on an outer peripheral side on which the magnetic sensors 24 are disposed, and no steps are provided on a central axis side. Instead of this, for example, by making the dimension of each of the main magnets 35 and the dimension of each of the auxiliary magnets 36 in the radial direction equal to each other, a structure which has steps also on the central axis side can also be configured.

As described above, according to the fifth embodiment, the present invention can also be applied to the axial gap type permanent magnet motor 31.

### (Other Embodiments)

The divided resin parts are not limited to the six parts and may be four parts, eight parts, or the like.

The dimensions of the respective parts may be appropriately changed in accordance with individual design.

The several embodiments of the present invention are described. However, these embodiments are presented as examples and are not intended to limit the scope of the invention. These new embodiments can be implemented by other various configurations, and a variety of omission, replacement, and modification can be made without departing from the scope of the invention. These embodiments and variations of these embodiments are embraced within the scope and gist of the invention and are embraced in the invention described in the appended claims and the range of equivalency of the claims.

## Claims

1. A method for manufacturing a rotor magnet of a rotor of a permanent magnet motor including a magnet, the magnet being constituted of a plurality of main magnets and a plurality of auxiliary magnets, the main magnets being magnetically oriented in first direction, the auxiliary magnets being magnetically oriented in a second direction different from the first direction, the auxiliary magnets being disposed respectively between the main magnets, the method comprising:
in the rotor,
forming a divided resin molded part by resin-molding the main magnets and the auxiliary magnets, the main magnets and the auxiliary magnets being arrayed in an arc-like shape whose circumference is divided into a plurality of parts, the main magnets being not yet magnetized, the auxiliary magnets being magnetized in a second direction;
magnetizing the main magnets of the divided resin molded part in a first direction; and
connecting a plurality of divided resin molded parts in a circular shape.

2. The method for manufacturing a rotor magnet of a rotor of a permanent magnet motor according to claim 1, further comprising
assembling the plurality of divided resin molded parts connected in the circular shape to a rotor frame, before magnetizing the main magnets of the divided resin molded part.

3. The method for manufacturing a rotor magnet according to claim 1 or 2, wherein a thickness of each of the auxiliary magnets in a radial direction is set to be thinner than a thickness of each of the main magnets.

4. The method for manufacturing a rotor magnet according to claim 1 or 2, wherein the main magnets and the auxiliary magnets are arrayed such that steps are provided on an end surface side on which the main magnets and the auxiliary magnets face a magnetic sensor.

5. A rotor magnet manufactured by the method for manufacturing a rotor magnet according to any one of claims 1 to 4.

6. A permanent magnet motor comprising a rotor having a plurality of main magnets magnetically oriented in a direction in which a rotor yoke is located and a plurality of auxiliary magnets magnetically oriented in a circumferential direction, the auxiliary magnets being arranged respectively between the main magnets, wherein
on each at least one end portion of each of the main magnets in a longitudinal direction, a step is provided, and on each at least one end portion of each of the auxiliary magnets in the longitudinal direction, a step is provided, respectively.

7. The permanent magnet motor according to claim 6, wherein a length of each of the main magnets in the longitudinal direction is set to be longer than a length of each of the auxiliary magnets in the longitudinal direction.

8. The permanent magnet motor according to claim 6 or 7, wherein the permanent magnet motor is a radial gap type motor in which the longitudinal direction coincides with an axial direction, and
the auxiliary magnets and the main magnets are arranged such that one end surface of each of the auxiliary magnets in the axial direction is recessed in the axial direction from one end surface of each of the main magnets in the axial direction.

9. The permanent magnet motor according to claim 6 or 7, wherein the permanent magnet motor is an axial gap type motor in which the longitudinal direction coincides with a radial direction, and
the auxiliary magnets and the main magnets are arranged such that one end surface of each of the auxiliary magnets in the radial direction is recessed in the radial direction from one end surface of each of the main magnets in the radial direction.

10. The permanent magnet motor according to any one of claims 6 to 9, having a stator including a magnetic sensor, wherein the magnetic sensor is disposed in such a way as to be engaged with a step portion when the rotor is rotated, the step portion being provided on one end surface of the main magnets and each of the auxiliary magnets.
